# EUROPEAN PATENT APPLICATION

(11) **EP 4 717 448 A1**
(43) Date of publication of application: **01.04.2026**
(21) Application number: 24202967.6
(22) Date of filing: 26.09.2024
(51) Int. Cl.: B29D 30/54, B24B 5/36, B24B 49/12

(54) **METHOD AND SYSTEM FOR RETREADING AIRCRAFT TIRES**

(71) Applicant: Bridgestone Aircraft Tire (Europe), S.A., 7080 Frameries (BE)
(72) Inventor: LATOUCHE, Nicolas, 7332 Sirault (BE); FRANCISCHELLI, Philippe, 59570 Bavay (FR)
(74) Representative: Bardehle Pagenberg Partnerschaft mbB Patentanwälte Rechtsanwälte

(57) **Abstract**

The present invention relates to a computer-implemented method for buffing an aircraft tire, the aircraft tire comprising a body ply, one or two cover plies, and a tire tread, the method comprising: spinning the tire around a rotation axis; obtaining an optical profile measurement of the tire tread; determining, based on the profile measurement, a first buffing trajectory arranged below the tire tread and above the cover ply; performing, based on the first buffing trajectory, a first buffing step for partially removing the tire tread above the cover ply; cutting one or more probing recesses into the tire, for at least partially exposing the cover ply; determining, based on an optical measurement of the one or more probing recesses, a second buffing trajectory arranged below the cover ply and above the body ply of the tire; performing, based on the second buffing trajectory, a second buffing step for removing the cover ply.

## Description

### 1. Technical field

The present disclosure is directed to a method and system for buffing and retreading aircraft tires. Specifically, the present disclosure pertains to a computer-implemented method and a system for accurately removing tire tread and cover plies using measurements, such as optical measurements, to determine precise buffing trajectories, thereby facilitating an automated buffing and retreading process.

### 2. Technical background

Aircraft wheels are critical components of the landing gear system, serving as the primary interface between the aircraft and the ground during takeoff, landing, and taxiing maneuvers. As such, they are subjected to substantial mechanical loads, thermal stresses, and environmental factors that can lead to wear, corrosion, and structural degradation over time. The need to ensure the reliability and safety of aircraft operations necessitates periodic inspection, maintenance, and replacement of worn or damaged wheels, which can impose significant logistical and financial burdens on airlines, maintenance providers, and aircraft manufacturers.

In the field of aircraft tire maintenance, it is common to perform buffing operations to remove worn or damaged tread and prepare the tire for retreading. The buffing operations generally involve removing the outer tread layer to expose the underlying plies, which may include one or more cover plies and one or more body plies. However, accurately determining the depth and location of these plies is challenging, especially given the variations in tire construction and wear patterns. This difficulty can result in either excessive material removal, which compromises the structural integrity of the tire, or insufficient removal, which fails to adequately prepare the tire for retreading.

Known systems typically involve manual or semi-automated processes where operators use mechanical tools to grind down the tire tread to a specified depth. These traditional methods rely heavily on operator skill and experience, which can lead to inconsistencies in the buffing process. Additionally, manual buffing is labor-intensive and time-consuming, often resulting in extended downtime for aircraft maintenance. Known systems to tire buffing therefore often lack the precision required to consistently achieve optimal results. For instance, employing manual buffing steps and manual measurements, which are prone to human error, can lead to variability in the buffing depth and trajectory. Some semi-automated systems have been developed, but they typically rely on pre-programmed buffing paths that do not account for the unique wear patterns and structural differences of each tire. Some semi-automated systems for buffing are not able to finalize the tire, as they apply a predetermined profile based on a tire dimension. Hence, despite some attempts have been undertaken to improve methods and systems in the field of tire maintenance, there remains a need for more precise and efficient methods to buff aircraft tires.

Overall, the existing approaches thereby result in suboptimal buffing, where either too much or too little material is removed. Furthermore, the inability to accurately measure and adapt to the tire's profile in real-time limits the effectiveness of these systems. Further, existing approaches demand labor and are therefore cost intensive.

Against this background, an object of the present disclosure is to provide a method and system for buffing aircraft tires that at least partially overcomes the disadvantages of known systems.

### 3. Summary of the invention

This object is achieved, at least partly, by the subject-matter of the independent claims. In addition, further advantageous embodiments follow from the dependent claims and the description.

In particular, this object is addressed by a computer-implemented method for buffing an aircraft tire, the aircraft tire comprising a body ply, one or two cover plies, and a tire tread, the method comprising: spinning the tire around a rotation axis; obtaining an optical profile measurement of the tire tread; determining, based on the profile measurement, a first buffing trajectory arranged below the tire tread and above the cover ply; performing, based on the first buffing trajectory, a first buffing step for partially removing the tire tread above the cover ply; cutting one or more probing recesses into the tire, for at least partially exposing the cover ply; determining, based on an optical measurement of the one or more probing recesses, a second buffing trajectory arranged below the cover ply and above the body ply of the tire; performing, based on the second buffing trajectory, a second buffing step for removing the cover ply.

In this manner, an improved method for buffing an aircraft tire is provided. For instance, the precision in determining the trajectories may provide a more accurate and controlled buffing process, addressing the challenge of maintaining the structural integrity of the tire while effectively removing worn-out layers. The method thus allows to overcome the difficulty of achieving precise material removal in a multi-layered tire structure, thereby enhancing the safety and performance of the aircraft tire. It may be appreciated that all method steps, in particular all buffing steps may use real time calculation to, e.g., adapt one or more trajectories to the deformation of the tire. This may facilitate to keep a constant thickness of material, such as rubber, on an outermost ply.

Spinning the tire around a rotation axis has the advantage of ensuring uniformity in the buffing process. Spinning the tire around a rotation axis may involve the use of a motor, such as an electrical motor. In particular, a motorized spindle or similar rotational device may be employed that may securely hold and/or rotate the aircraft tire. However, many different means may be used for rotating the tire as understood by the skilled person.

An optical profile measurement of the tire tread is obtained. This may accurately map the surface contours of the tire. The optical profile measurement has the advantage of allowing the determination of a first buffing trajectory that may be precisely arranged below the tire tread and/or above the cover ply. Alternatively, the profile measurement may be obtained via a method different from optical methods. In particular, in some examples, different means may be employed to obtain the profile measurement, e.g., mechanical measurement methods. As understood by the skilled person, various ways to implement the profile measurement may be possible and encompassed by the present disclosure.

Determining, based on the profile measurement, a first buffing trajectory may involve computational algorithms within a computer system (e.g., comprised in a control unit) that may analyze the optical profile data. An optimal path for a buffing tool to follow may be calculated. This may ensure that the tool remains below the tire tread and/or above the cover ply. This calculated trajectory may then be communicated to an industrial robot operating a tire buffing tool through a control interface. It is noted that the buffing tool may be the same or a different tool compared to a tire rubber cutting tool described elsewhere herein.

The first buffing trajectory ensures that the first buffing step partially removes the tire tread without damaging the underlying cover ply. A buffing tool may be precisely controlled by a control unit. The tool's movement may be guided by the pre-determined first buffing trajectory, ensuring partial removal of the tire tread above the cover ply. A communication between a control unit and the buffing tool may be provided, which may involve precise motor control signals and feedback loops to maintain accuracy.

Following this, one or more probing recesses are cut into the tire to at least partially expose the cover ply. This step has the advantage of obtaining an optical measurement of the exposed cover ply, which in turn allows for the determination of a second buffing trajectory. The second trajectory is arranged below the cover ply and above the body ply, ensuring that the subsequent buffing step removes the cover ply without compromising the body ply.

Determining, based on an optical measurement of the one or more probing recesses, a second buffing trajectory involves an optical measurement process which may employ similar or different means compared to the optical profile measurement. As described elsewhere herein, one or more cameras, such as industrial process cameras may be employed for this optical measurement of the probing recesses. In general, sensors, in particular optical sensors may be employed for this optical measurement of the probing recesses. The optical sensor(s) may capture the probing recesses, and this data may be transmitted to a control unit. The second buffing trajectory is then determined, which is arranged below the cover ply and above the body ply (as understood by the skilled person, this is seen along a radial direction), ensuring accurate removal of the cover ply.

For cutting the probing recesses, a robot may be employed, which may use a tire rubber cutting tool, such as a grinding tool. In some examples, this tool may not move laterally during cutting. Rather, the tire may be rotated, thereby providing a circumferential probing recess as described elsewhere herein. The optical sensor(s) may be moving along an axis, in particular along an axial direction of the tire. The optical sensor(s) may be moving to one, two, three or more positions in order to perform accurately optical measurements. It may be possible as described elsewhere herein that cutting of the probing recess is performed while the optical sensor(s) may perform optical measurements, e.g., detecting material of the tire. This may for instance involve detection of a color changes or the like in the tire. In some examples, detection of a black color by way of the optical measurement may indicate that cutting the probes still need to be performed and is not yet finalized. In some examples, detection of a white or yellow color by way of the optical measurement may indicate that cutting the probes may not be performed any more. In particular, optical sensor(s) may detect fibers or the like of the cover ply, this may be the case, because fibers are brighter compared to other material parts of the tire. In some examples, the robot may be controlled so as to perform the cutting step only in case fibers have not yet been detected.

Performing, based on the second buffing trajectory, a second buffing step for removing the cover ply may involve using a buffing tool (which may in some examples be the tire rubber cutting tool described elsewhere herein) to follow the second buffing trajectory. Precise control signals may be sent to the robot operating the tool, guiding it to remove the cover ply. This may be done without damaging the underlying body ply. A communication between the control unit and the buffing tool may ensure the process is executed with high precision and consistency.

It is understood that the described advantages may apply also for the following preferred embodiments.

According to an embodiment, obtaining the optical profile measurement of the tire tread comprises obtaining a laser profile measurement, preferably using two or more, more preferably four or more laser scanners, wherein at least a first laser scanner is arranged angled with respect to at least a second laser scanner, wherein preferably all laser scanners are arranged angled with respect to other laser scanners.

This has the advantage that a high-precision method for capturing the surface characteristics of the tire tread is introduced. Using two or more laser scanners, may enhance the accuracy and reliability of the profile data by providing multiple perspectives and reducing the likelihood of measurement errors due to occlusions or surface irregularities.

At least a first laser scanner is arranged angled with respect to at least a second laser scanner, ensuring that the laser beams intersect the tire tread at different angles, thereby capturing a more detailed and multidimensional profile of the tire surface. This angled arrangement allows for the detection of subtle variations in the tread surface that might be missed if the scanners were aligned in parallel. Preferably, all laser scanners are arranged angled with respect to other laser scanners, creating a network of intersecting laser beams that cover the tire tread from multiple directions. This comprehensive scanning approach ensures that the profile measurement is robust and accurate, providing a solid foundation for subsequent steps in the buffing process. By ensuring that the buffing steps are based on accurate and detailed profile measurements, the method improves the overall quality of the tire buffing process, leading to better performance and a more efficient process.

According to an embodiment, performing the first buffing step comprises controlling an industrial robot, preferably a 6-axis robot, operating a tire rubber cutting tool based on the first buffing trajectory.

This may introduce a level of automation and precision to the buffing process that is not achievable through manual methods. The industrial robot may enhance the accuracy, consistency, and efficiency of the tire buffing method, leveraging advanced robotics and automation technologies to achieve superior results compared to traditional manual buffing techniques.

According to an embodiment, cutting the one or more probing recesses into the tire comprises: cutting two or more circumferential probing recesses into the tire, preferably by controlling an industrial robot, preferably a 6-axis robot, operating a tire rubber cutting tool; and / or controlling an industrial robot, preferably a 6-axis robot, operating a tire rubber cutting tool while performing the optical measurement of the probing recesses until the cover ply is exposed for each of the probing recesses.

This has the advantage that a more precise and automated approach to creating the probing recesses is introduced, ensuring uniformity and accuracy in the depth and placement of the recesses around the circumference of the tire.

The use of an industrial robot, particularly a 6-axis robot, allows for enhanced flexibility and control in the cutting process, accommodating complex movements and angles that may be required to achieve the desired recess geometry. This automation reduces the likelihood of human error, increases efficiency, and ensures consistent quality in the preparation of the tire for subsequent buffing steps.

Moreover, the integration of the cutting and measuring processes brings advancements in the precision and reliability of the method. By continuously monitoring the optical depth of the probing recesses during the cutting process, the method may make real-time adjustments to the cutting trajectory, ensuring that the cover ply is accurately and consistently exposed without overcutting or undercutting. This dynamic feedback loop between the optical measurement and the cutting tool, facilitated by the industrial robot, enhances the overall accuracy of the buffing process. It ensures that the subsequent buffing steps are based on precise and reliable data, thereby improving the quality and performance of the buffed tire. Additionally, this integrated approach reduces the need for manual inspections and adjustments, streamlining the process and minimizing downtime.

According to an embodiment, the two or more circumferential recesses are cut into the tire in a predefined patter preferably arranged substantially equidistantly from one another. Preferably, a first circumferential recess is arranged in proximity of a first end of the tire, a second circumferential recess is arranged in proximity of a second end of the tire opposite to the first end seen in the axial direction (AX) of the tire, wherein a third circumferential recess is arranged between, preferably in the middle of the first and the second recess, seen in the axial direction of the tire. Preferably, cutting one or more probing recesses is performed for exposing the cover ply at substantially each angular location along the circumference of the tire.

The predefined pattern ensures uniformity and consistency in the buffing process, allowing for a more controlled removal of the tire tread and cover ply. The placement of recesses at both ends of the tire may ensure that a buffing trajectory can be accurately determined, e.g., covering the entire axial length of the tire. This may provide a comprehensive removal of the tread and cover ply. Furthermore, the middle recess serves to further stabilize the determination of the second buffing trajectory by providing an additional reference point for the optical measurement, thereby enhancing the accuracy of the buffing trajectory.

This embodiment may ensure that the cover ply is uniformly exposed, allowing for a more accurate determination of the second buffing trajectory.

According to an embodiment, the method includes determining the second buffing trajectory by first determining, for each of the probing recesses, a position of the exposed cover ply.

This may introduce a precise mechanism for identifying the exact location of the cover ply within the tire structure, which may be critical for ensuring that the subsequent buffing step may not damage the underlying body ply. By obtaining the position of the exposed cover ply for each probing recess, the method ensures that the second buffing trajectory is accurately aligned with the actual structure of the tire, thereby enhancing the precision and effectiveness of the buffing process.

Furthermore, the method includes calculating the second buffing trajectory based on the determined positions of the exposed cover ply, with a preference for the trajectory to comprise three arc segments.

This feature adds a layer of sophistication to the buffing process by introducing a specific geometric configuration for the buffing trajectory. The use of three arc segments likely provides a more controlled and uniform removal of the cover ply, which can be particularly beneficial in maintaining the structural integrity of the tire and ensuring a smooth surface for subsequent retreading or use.

According to an embodiment, obtaining the optical profile measurement of the tire tread comprises obtaining a position and/or a depth of one or more grooves of the tire tread.

This may enhance the precision of the optical profile measurement by ensuring that specific characteristics of the tire tread, such as the grooves, are accurately captured.

Additionally, obtaining the optical profile measurement of the tire tread also comprises obtaining a position and/or a depth of the bottoms of the grooves of the tire tread. This further refinement allows for an even more detailed and accurate profile measurement, as it includes the precise contours of the groove bottoms.

Furthermore, determining the first buffing trajectory comprises calculating the first buffing trajectory based on the obtained position and/or depth of the one or more grooves of the tire tread.

This introduces a computational step where the detailed profile data is used to calculate an optimal buffing trajectory. This calculated trajectory ensures that the buffing process is precisely aligned with the actual contours of the tire tread, thereby minimizing material waste and ensuring a uniform buffing result.

According to an embodiment, the one or more laser scanners operate at a wavelength of between 100 to 800 nanometers (nm), preferably 200 to 800 nm, preferably 200 to 600 nm, more preferably 300 to 500 nm, most preferably between 380 to 430 nm.

According to an embodiment, determining the first and / or the second buffing trajectory comprises determining the first and / or the second buffing trajectory based on tire construction information for the tire being buffed.

The tire construction information may include data such as the thickness of the tire tread, the material properties of the cover ply and body ply, and the overall structural design of the tire. By integrating this tire construction information, the system can enhance the precision and accuracy of the buffing process.

According to a further embodiment, the method involves determining a third buffing trajectory based on the second buffing trajectory and tire construction information for the tire being buffed and performing, based on the third buffing trajectory, a third buffing step for removing tire rubber material above the body ply of the tire, preferably the outermost body ply of the tire in case the tire comprises more than one body ply.

This may introduce a sophisticated layer of precision by incorporating tire construction data into the buffing process, ensuring that the third buffing trajectory is not only a continuation of the second but also tailored to the specific structural nuances of the tire. This integration ensures that the buffing process is dynamically adjusted in real-time, enhancing the accuracy and efficiency of the tire buffing operation.

Following the determination of the third buffing trajectory, the method entails performing a third buffing step for removing tire rubber material above the body ply of the tire. This step is crucial for preparing the tire for subsequent processes, such as retreading or further inspection.

Preferably, in cases where the tire comprises more than one body ply, the third buffing step targets the outermost body ply. This may ensure that the inner plies remain intact and undisturbed. This feature brings an added layer of specificity and care to the buffing process, particularly for tires with complex multi-ply constructions. By focusing on the outermost body ply, the method ensures that the tire's structural layers are preserved in their optimal state, enhancing the overall safety and performance of the tire post-buffing.

According to a further embodiment, determining the first, the second, and/or the third buffing trajectory involves calculating one or more, preferably at least five, such as six, seven, eight, nine, ten or more, arc segments of the respective buffing trajectory, which preferably span across the tire. This introduces a more refined and precise method for defining the buffing trajectories, enhancing the accuracy of the buffing process. This may involve the integration of advanced computational algorithms within a control unit, which may process the optical profile measurements of the tire tread and the probing recesses.

According to a further embodiment, obtaining the optical profile measurement of the tire tread comprises tracking a continuous tire deformation during spinning the tire around a rotation axis.

This has the advantage that the optical measurement system is configured to continuously monitor and record the deformation of the tire tread as it spins. The communication between components in this embodiment may involve a real-time data acquisition system that captures dynamic changes in the tire's profile. The optical measurement device, likely a high-resolution camera or laser scanner as described elsewhere herein, may transmit data to a control unit. This may interpret the deformation patterns and may provide for respective correction means.

According to a further embodiment, the computer-implemented method for buffing an aircraft tire, which involves spinning the tire around a rotation axis, may be enhanced by comprising substantially continuously measuring the radius of the tire during the first buffing step and/or the second buffing step and/or the third buffing step.

This continuous measurement feature introduces a real-time feedback loop between the buffing apparatus and the tire's changing profile, thereby allowing for dynamic adjustments to the buffing trajectory and depth. By continuously monitoring and adjusting the buffing steps in real-time, the method ensures that the structural integrity of the tire is preserved while achieving the desired tread and ply removal. Continuously measuring the radius may comprise monitoring growth and/or inflation of the tire. This may also include such measurement between each cutting phase.

The objects mentioned in here are also addressed by a method for retreading an aircraft tire, comprising: buffing the aircraft tire according to any of the preceding embodiments; and adding new tire rubber material, and, optionally, a new cover ply and / or a new tire tread to the buffed aircraft tire.

The objects mentioned in here are also addressed by a system for buffing an aircraft tire, comprising means for carrying out the method of any of the embodiments described in here, the system preferably configured for retreading an aircraft tire, comprising means for carrying out the method for retreading an aircraft tire as described in here.

According to an embodiment, the system may comprise one or more of: an electric motor for rotating the aircraft tire; one or more laser scanners for profile measurements; one or more industrial process cameras for, e.g., performing optical measurement of the one or more probing recesses; an industrial robot, preferably a 6-axis robot, operating a tire rubber cutting tool; a control unit comprising processing circuitry and memory and being configured to control the system to carry out the method for buffing an aircraft tire as described in here.

The objects mentioned in here are also addressed by a computer program comprising instructions, which when executed by a control unit, cause a tire buffing and retreading system to carry out the method for buffing an aircraft tire as described in here.

It is noted that the method steps as described herein may include all aspects and/or embodiments described herein, even if not expressly described as method steps but rather with reference to a system (or unit or device). It is also to be understood that the features and advantages described with reference to a system (or unit or device) may equally be applicable to the method steps. Moreover, the system (or unit or device) as outlined herein may include means for implementing all aspects and/or embodiments as outlined herein, even if these may rather be described in the context of method steps. Furthermore, the features and advantages described with reference to the method steps may equally be applicable to the apparatus (or device or system).

### 4. Brief description of the figures

In the following, preferred embodiments are described, by way of example only. Reference is made to the following accompanying figures:
- Fig. 1: illustrates a flow chart of a method according to an embodiment;
- Fig. 2: illustrates a schematic tire during a method step according to an embodiment;
- Fig. 3: illustrates a schematic tire during a method step according to an embodiment;
- Fig. 4: illustrates two schematic tires during method steps according to an embodiment;
- Fig. 5: illustrates two schematic tires during method steps according to an embodiment;
- Fig. 6: illustrates two schematic tires during method steps according to an embodiment;
- Fig. 7: illustrates a schematic tire during a method step according to an embodiment;
- Fig. 8: illustrates two schematic tires during method steps according to an embodiment;
- Fig. 9: illustrates a tire during a method step according to an embodiment;
- Fig. 10: illustrates three tires during method steps according to an embodiment.

### 5. Detailed description of preferred embodiments

### Definitions

The terms "one end", "the other end", "outer side", "upper", "above", "inner side", "under", "below", "horizontal", "coaxial", "central", "end" "part", "length", "outer end", "left hand side", "right hand side" etc., which indicate the orientation or positional relationship, are based on the orientation or positional relationship shown in the drawings.

The terms "upper", "above", "below", "under" and the like as used in the present invention to indicate a relative position in space are used for the purpose of facilitating explanation to describe a unit, device, part, component and/or feature shown in the drawings relative to the relationship of another unit, device, part, component and/or feature.

The term of the relative position in space may be intended to include different orientations of the unit, device, part, component and/or feature other than those shown in the figures. For example, if the unit, device, part, component and/or feature in the figure is turned over, the unit, device, part, component and/or feature described as being "below" or "under" other units, devices, parts, components and/or features will be "above" the other unit, device, part, component and/or feature. Therefore, the exemplary term "below" can encompass both the above and below orientations.

The unit, device, part, component and/or feature can be oriented in other ways (rotated by 90 degrees or other orientations), and the space-related descriptors used herein are explained accordingly. More specifically, the word "above" means that one unit, device, part, component and/or feature is arranged or configured relatively in an exterior direction of the unit, device, part, component and/or feature towards another unit, device, part, component and/or feature; the word "below" means that one unit, device, part, component and/or feature is arranged or configured relatively in an interior direction of the unit, device, part, component and/or feature towards the another unit, device, part, component and/or feature.

### Embodiments shown in the figures

Subsequently, presently preferred embodiments will be outlined, primarily with reference to the above Figures. It is noted that further embodiments are certainly possible, and the below explanations are provided by way of example only, without limitation. Further, the present invention can also be used in other embodiments not explicitly disclosed hereafter. Moreover, as detailed below, the embodiments are compatible with each other, and individual features of one embodiment may also be applied to another embodiment.

While specific feature combinations are described in the following with respect to exemplary embodiments of the present disclosure, it is to be understood that not all features of the described aspects have to be present for realizing the technical advantages provided by the present disclosure, which is defined by the subject matter of the claims. The disclosed aspects may be modified by combining certain features of one aspect with one or more features of another aspect. Specifically, the skilled person will understand that features, components and/or functional elements of one aspect can be combined with technically compatible features, components and/or functional elements of any other aspect of the present disclosure given that the resulting combination falls within the definition of the present disclosure. The skilled person also understands that certain features may be omitted in so far as they appear dispensable.

Throughout the present figures and specification, the same reference numerals refer to the same elements. The figures may not be to scale, and the relative size, proportions, and depiction of elements in the figures may be exaggerated for clarity, illustration, and convenience. For the sake of clarity and conciseness, certain aspects of components or steps of certain embodiments are presented without undue detail where such detail would be apparent to those skilled in the art in light of the teachings herein and/or where such detail would obfuscate an understanding of more pertinent aspects of the embodiments.

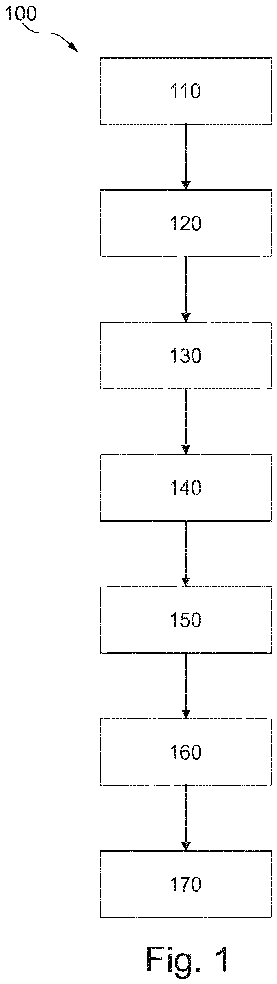

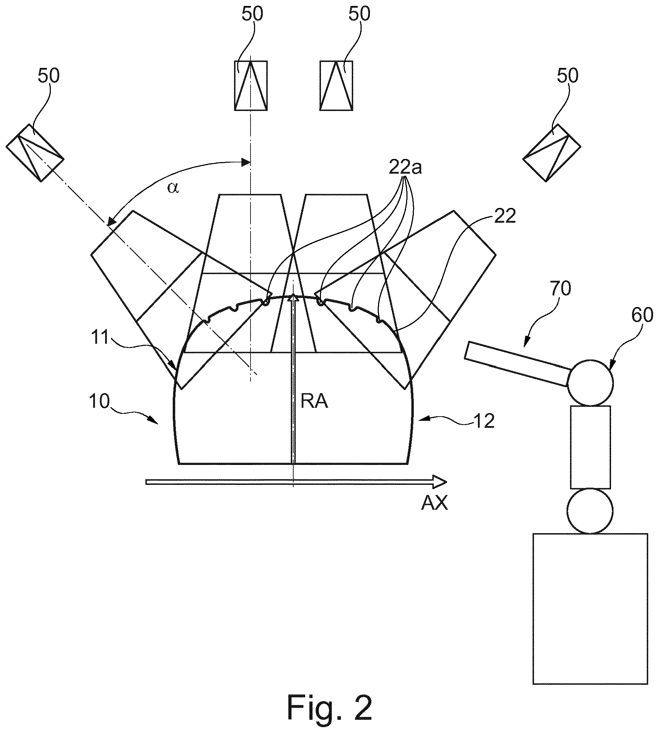

**Fig. 1** illustrates an embodiment of a computer-implemented method 100 for buffing an aircraft tire 10, the aircraft tire 10 comprising a body ply 20, one or two cover plies 21, and a tire tread 22, the method 100 comprising: spinning 110 the tire 10 around a rotation axis (e.g., around AX shown in in **Fig. 2**); obtaining 120 an optical profile measurement of the tire tread; determining 130, based on the profile measurement, a first buffing trajectory arranged below the tire tread and above the cover ply; performing 140, based on the first buffing trajectory, a first buffing step for partially removing the tire tread above the cover ply; cutting 150 one or more probing recesses into the tire, for at least partially exposing the cover ply; determining 160, based on an optical measurement of the one or more probing recesses, a second buffing trajectory arranged below the cover ply and above the body ply of the tire; performing 170, based on the second buffing trajectory, a second buffing step for removing the cover ply.

The method allows subsequent retreading of worn aircraft tires, which is usually is complex process, in particular due to irregularities by which tires are worn. Many existing methods perform manual buffing, e.g. based on eyes of personnel, which requires labor, and which poses risks on human injuries. The method proposed in here allows to substantially overcome these disadvantages. Operators may only need to load/unload tires and/or change tools with which robots may perform the method. Furthermore, the method is thereby cost-effective, fail safe, reliable and robust.

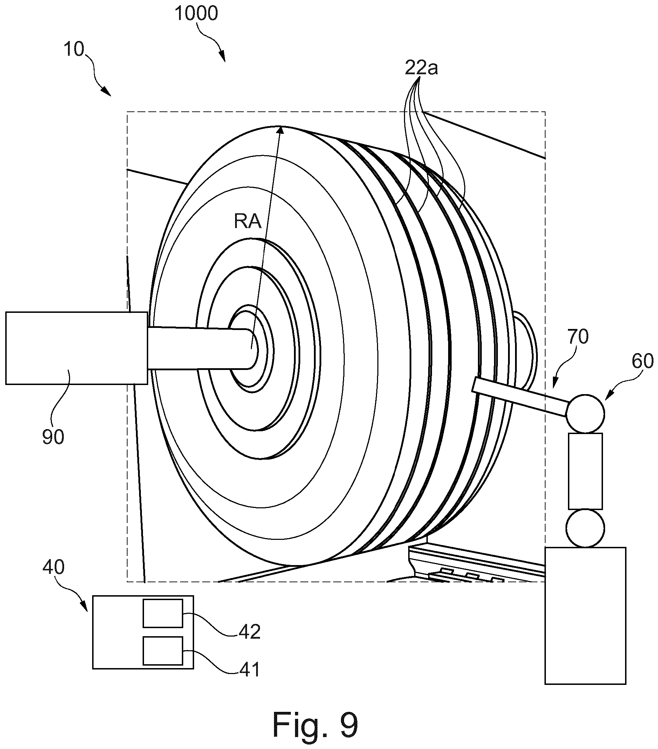

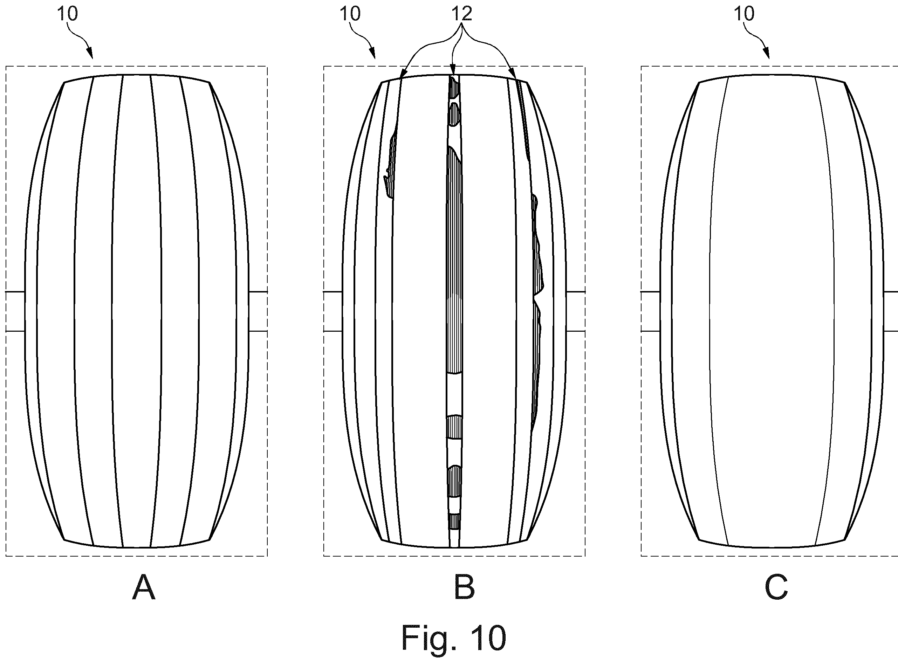

**Figs. 2 to 8** show an aircraft tire 10 or two aircraft tires 10 in a schematic way during various method steps. **Figs. 9** **and** **10** show one or more aircraft tires 10 during various method steps.

The tire 10 of these embodiments exemplarily comprises one body ply 20, one cover ply 21, and one tire tread 22. However, the tire 10 is no limited thereto and may comprise one or more body plies 20, and/or one or more cover plies 21.

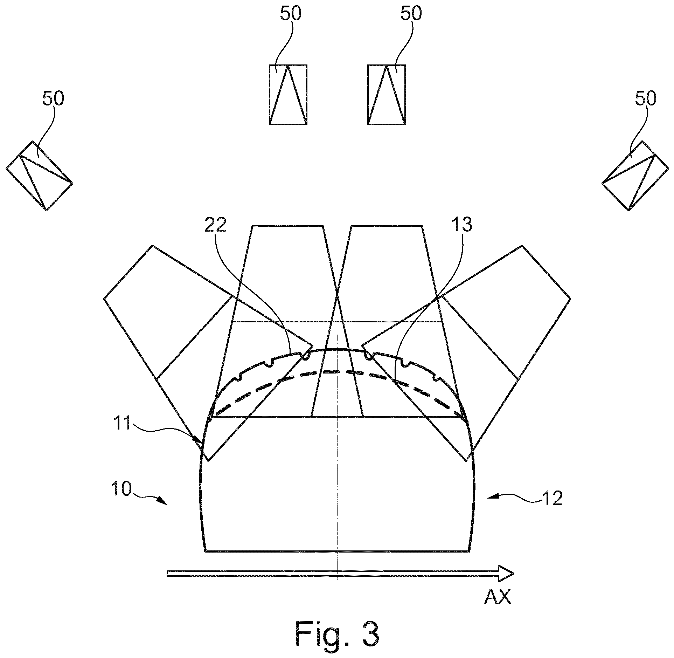

As shown in **Fig. 2** **and** **Fig. 3**, obtaining 120 the optical profile measurement of the tire tread 22 may comprise obtaining a laser profile measurement, preferably using two or more, more preferably four or more laser scanners 50. At least a first laser scanner 50 may be arranged angled with respect to at least a second laser scanner 50, preferably all laser scanners 50 are arranged angled with respect to other laser scanners. As shown in **Fig. 2**, four laser scanners 50 may be provided. The left-most laser scanner 50 (arranged on the first end 11 of the tire 10) and the second left-most laser scanner 50 are angled by an angle α.

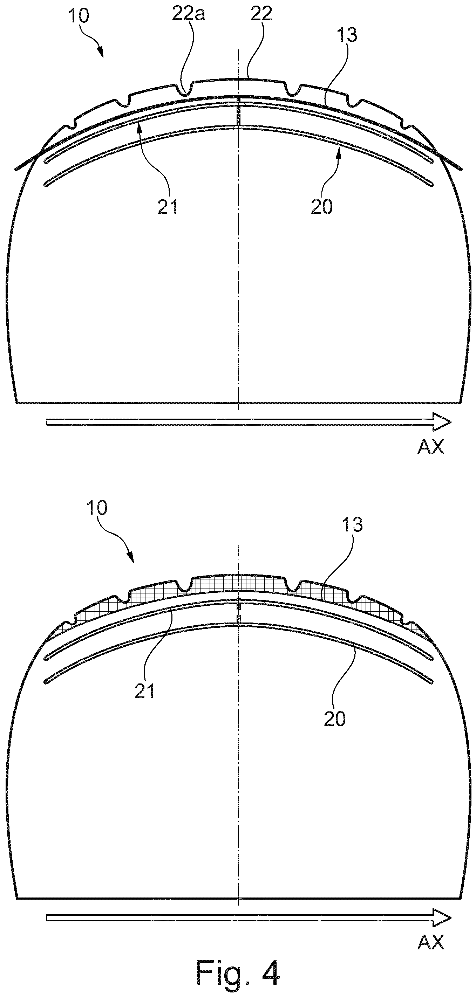

Obtaining 120 the optical profile measurement of the tire tread may comprise tracking a continuous tire deformation during spinning the tire 10 around a rotation axis. The rotation axis may be parallel to the axial direction AX indicated in **Fig. 3** for example. The determined first buffing trajectory 13 is indicated in **Fig. 3** and **4****.** The left part of **Fig. 4** shows a tire 10 before the first buffing step 140 and the right part of **Fig. 4** shows a tire 10 after the first buffing step 140.

Performing the first and/or the second buffing step may comprise substantially continuously measuring a radius RA (indicated in **Fig. 2** and **Fig. 9**) of the tire 10.

Performing the first buffing step may comprise controlling an industrial robot 60 (indicated in **Fig. 2** and **Fig. 9**), preferably a 6-axis robot, operating a tire rubber cutting tool 70 based on the first buffing trajectory 13 (seen in **Fig. 3** and **Fig. 4**). A control unit 40 (e.g., indicated in **Fig. 9**) may be provided that sends commands to the industrial robot 60 based on the first buffing trajectory determined from the optical profile measurement of the tire tread. This control unit may include a central processing unit (CPU) that processes the profile data and translates it into movement instructions for the robot 60. The industrial robot 60, preferably a 6-axis robot, offers enhanced flexibility and dexterity, allowing for complex movements and precise control over the tool's 70 position and orientation. The use of a 6-axis robot 70 specifically brings the advantage of multi-directional movement, which may be important for navigating the contours of the tire tread and achieving a uniform buffing result. Furthermore, the industrial robot 70 may operate the tire rubber cutting tool 60 based on the first buffing trajectory 13, which means that the robot 70 may be provided with an end effector equipped with a specialized cutting tool 70 designed for removing rubber material from the tire tread.

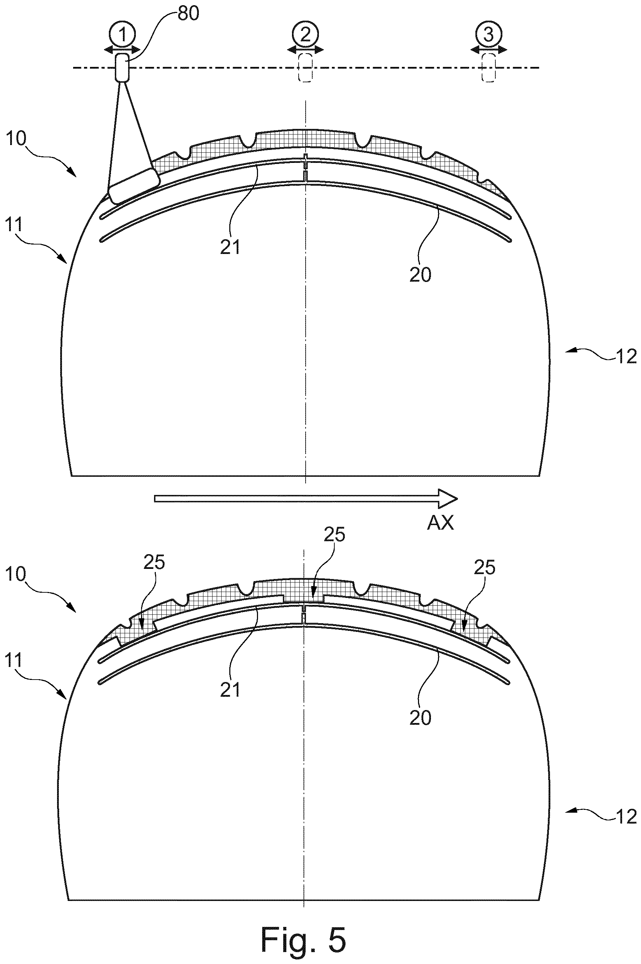

The method step of cutting 150 the one or more probing recesses 25 into the tire 10 may comprise: cutting two or more circumferential probing recesses 25 into the tire 10 (as best seen in **Fig. 5**), preferably by controlling the industrial robot 60 described elsewhere herein, preferably the 6-axis robot 60, operating a tire rubber cutting tool 70. Cutting 150 may additionally or alternatively comprise controlling the industrial robot 60, preferably the 6-axis robot 60, operating a tire rubber cutting tool 70 while performing the optical measurement (as indicated in the upper part of **Fig. 5** by means of one or more industrial process cameras 80) of the probing recesses 25 until the cover ply 21 is exposed for each of the probing recesses 25. As can be seen in the lower part of **Fig. 5**, the cover ply 21 is exposed for each of the probing recesses 25.

The two or more circumferential recesses 25 may be cut into the tire 10 in a predefined patter preferably arranged substantially equidistantly from one another (as indicated in the upper part of **Fig. 5**). Preferably, a first circumferential recess 25 (e.g., the one on the left hand side in the lower part of **Fig. 5**) is arranged in proximity of a first end 11 of the tire 10, a second circumferential recess 25 (e.g., the one on the right hand side in the lower part of **Fig. 5**) is arranged in proximity of a second end 12 of the tire opposite to the first end 11 seen in the axial direction (AX) of the tire 10, wherein a third circumferential recess 25 (e.g., the one in the middle in the lower part of **Fig. 5**) is arranged between, preferably in the middle of the first and the second recess, seen in the axial direction of the tire. Preferably, cutting 150 one or more probing recesses 25 is performed for exposing the cover ply 21 at substantially each angular location along the circumference of the tire 10.

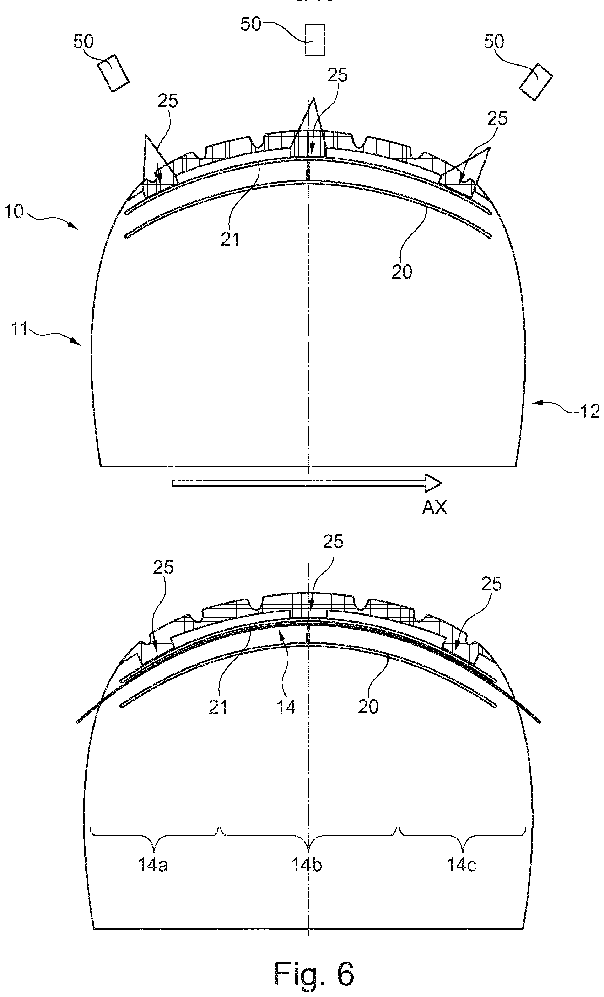

The method step of determining 160 the second buffing trajectory 14 (as indicated in the lower part of **Fig. 6**) may comprise: determining, for each of the probing recesses 25, a position of the exposed cover ply 21 (as indicated in the upper part of **Fig. 6** by means of one or more laser scanners 50), and calculating, based on the determined positions of the exposed cover ply 21, the second buffing trajectory 14, preferably comprising three arc segments 14a, 14b, 14c. The calculation of the second buffing trajectory 14 based on the positions of the exposed cover ply 21 involves complex algorithms and precise control mechanisms to ensure that the buffing tool follows the desired path accurately. This may involve effective communication between the measurement system, a control unit (which may comprise a computational unit responsible for trajectory calculation), and the buffing tool. The preference for three arc segments 14a, 14b, 14c suggests a design consideration aimed at optimizing the buffing process, potentially reducing wear on the tool 70 and improving the overall efficiency and quality of the buffing steps. This may bring improvements in terms of precision, control, and efficiency to the method of buffing an aircraft tire, ensuring that the tire is prepared to the highest standards, e.g., for further retreading.

The second buffing trajectory 14 may be determined from, e.g., one or more points that have a predefined distance below the cover ply 21. The second buffing trajectory 14 may be determined based on one or more, in particular three arcs 14a, 14b, 14c, that may pass through the determined points. A straight line may be employed for both ends of the outermost arcs to form the second buffing trajectory 14.

The method step of obtaining 120 the optical profile measurement of the tire tread 22 (indicated in **Fig. 2** and on the left hand side of **Fig. 4**) may comprise obtaining a position and/or a depth of one or more grooves 22a (indicated in **Fig. 2** and on the left hand side of **Fig. 4**; for brevity not all grooves are indicated with reference numerals; the tire 10 in the left part of **Fig. 4** may exemplarily comprise six grooves 22a) of the tire tread 22, in particular of the bottoms of the grooves 22a of the tire tread 22. Further, determining 130 the first buffing trajectory 13 may comprise calculating the first buffing trajectory 13 based on the obtained position and / or depth of the one or more grooves 22a of the tire treat 22.

The one or more laser scanners 50 (see **Fig. 2****,** **3****,** and **6**), which may be integral components of the system 1000 (a system exemplarily being indicated in **Fig. 9**), may communicate with a control unit 40. Said control unit may comprise a central processing unit (CPU) and may be part of the system 1000. This communication may be facilitated through data transmission protocols that allow the one or more scanners 50 to send, e.g., high-resolution optical data to the CPU in, e.g., real-time. The CPU (e.g., being comprised in the control unit 40) may process this data to generate the first buffing trajectory 13 and/or the second buffing trajectory 14. The specific wavelength range of 100 to 800 nanometers (nm) for the laser scanners 50 ensures that the optical measurements are precise and can penetrate the tire tread 22 to accurately profile its surface. This wavelength range is broad enough to accommodate various types of tire materials and conditions, enhancing the versatility of the buffing method 100. Preferably, the laser scanners 50 operate within a narrower wavelength range of 200 to 600 nm, which provides a balance between measurement accuracy and energy efficiency. This preferred range is particularly effective for detecting subtle variations in the tire tread 22, which may be important for determining the first buffing trajectory 13. More preferably, the wavelength range is further narrowed to 300 to 500 nm, which enhances the scanners' ability to detect fine details in the tire tread 22 and cover ply 21. Most preferably, the laser scanners 50 operate within an even narrower range of 380 to 430 nm. This specific range is optimal for achieving the highest resolution in optical measurements, thereby ensuring that the cover ply 21 and body ply 20 are accurately identified and that the second buffing step 170 is performed with utmost precision.

Determining the first 13 and / or the second 14 buffing trajectory may comprise determining the first 13 and / or the second 14 buffing trajectory based on tire construction information for the tire being buffed. The tire construction information may include data such as the thickness of the tire tread, the material properties of the cover ply 21 and body ply 20, and the overall structural design of the tire 10.

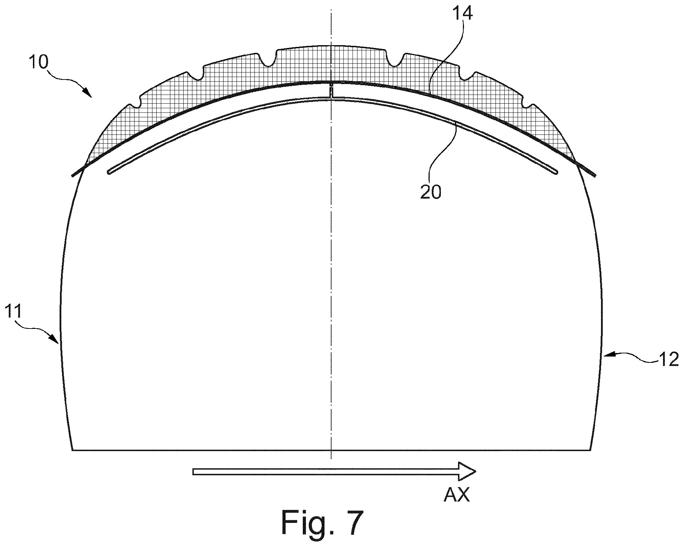

**Fig. 7** shows a tire 10 after performing the second buffing step 170. The material above the second buffing trajectory 14 has been removed.

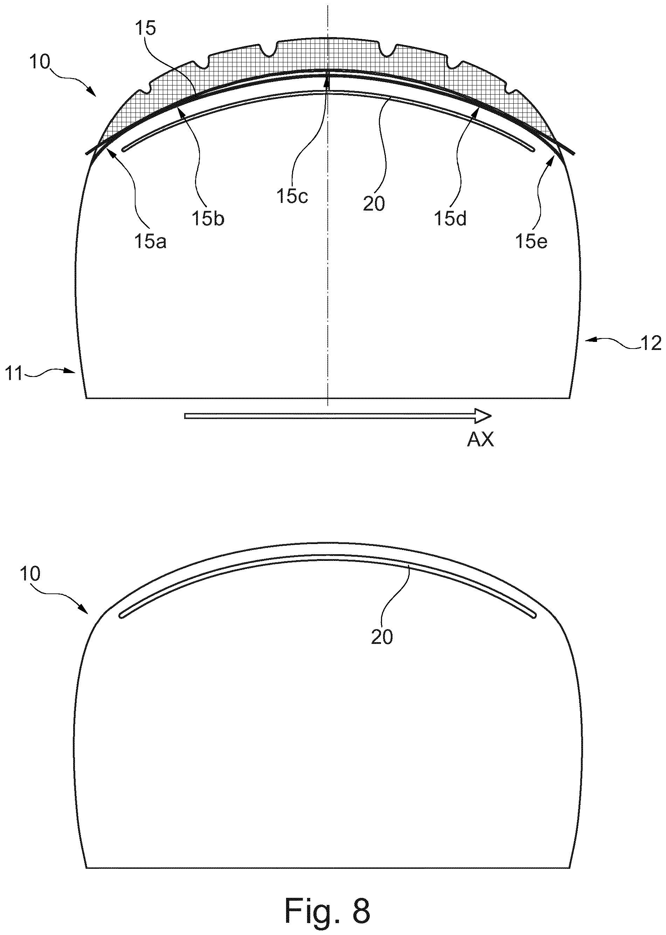

The method 100 may comprise determining a third buffing trajectory 15 (seen in the upper part of **Fig. 8**) based on the second buffing trajectory and tire construction information for the tire 10 being buffed. The method may also comprise performing, based on the third buffing trajectory 15, a third buffing step for removing tire rubber material above the body ply 20 of the tire 10 (seen in the lower part of **Fig. 8**), preferably the outermost body ply 20 of the tire 10 in case the tire 10 comprises more than one body ply 20. Determining the first 13, the second 14 and / or the third 15 buffing trajectory may comprise calculating one or more, preferably five, arc segments 13a, 13b, 13c, 14a, 14b, 14c, 15a, 15b, 15c, 15d, 15e of the respective buffing trajectory, preferably spanning across the tire 10. The upper part of **Fig. 8** exemplarily shows five arc segments 15a, 15b, 15c, 15d, 15e of the third buffing trajectory 15. The lower part of **Fig. 6** exemplarily shows three arc segments 14a, 14b, 14c of the second buffing trajectory 14.

As described elsewhere in here, also a method for retreading an aircraft tire is provided, the method comprising buffing the aircraft tire according to method 100 and adding new tire rubber material, and, optionally, a new cover ply and / or a new tire tread to the buffed aircraft tire.

**Fig. 9** also exemplarily indicates a system 1000 for buffing an aircraft tire 10, comprising means for carrying out the method 100 described in here. The system 1000 may be configured for retreading the aircraft tire, comprising means for carrying out the method for retreading the aircraft tire 10. The system 1000 may comprise an electric motor 90 for rotating the aircraft tire 10, one or more laser scanners 50 (seen inter alia in **Fig. 2**) for profile measurements, one or more industrial process cameras 80 (seen in **Fig. 5**), an industrial robot 60, preferably a 6-axis robot, operating a tire rubber cutting tool 70, and a control unit 40 comprising processing circuitry 41 and memory 42 and being configured to control the system to carry out the method 100. As noted elsewhere in here, the control unit 40 may comprise a CPU.

**Fig. 10** illustrates a tire 10 after the first buffing step 140 and before the step of cutting 150 (left hand side, A), a tire 10 after the step of cutting 150 and before the step of performing a second buffing step 170 (middle, B), and a tire 10 after performing the second buffing step 170 (right hand side, C).

Whether described as method steps, computer program and/or means, the functions described herein may be implemented in hardware, software, firmware, and/or combinations thereof. If implemented in software/firmware, the functions may be stored on or transmitted as one or more instructions or code on a computer-readable medium. Computer-readable media include both computer storage media and communication media including any medium that facilitates transfer of a computer program from one place to another. A storage medium may be any available media that can be accessed by a general purpose or special purpose computer. By way of example, and not limitation, such computer-readable storage media can comprise RAM, ROM, EEPROM, FPGA, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. The control unit as described herein may also be implemented in hardware, software, firmware, and/or combinations thereof, for example, by means of one or more general-purpose or special-purpose computers, and/or a general-purpose or special-purpose processors.

Moreover, the described modules, functions, functional elements of the devices and systems disclosed herein can be implemented in hardware, in software, or a combination thereof. For instance, the described modules, functions, functional elements of the devices and systems disclosed herein may be implemented via application specific hardware components such as application specific integrated circuits, ASICs, and / or field programmable gate arrays, FPGAs, and / or similar components and / or application specific software modules, applications, or subroutines being executed on multi-purpose data and signal processing circuitry such as CPUs, DSPs and / or systems on a chip (SOCs) or similar components or any combination thereof. For instance, the various modules, functional elements, etc. described herein may be implemented on a multi-purpose data and signal processing device configured for executing application specific software modules and for communicating with various sensor devices or systems via conventional wireless communication interfaces such as a Near Field Communication (NFC), a WIFI and / or a Bluetooth interface. For example, aspects of the system described herein may be implemented on a smart phone or a tablet computer or a similar computing device.

While the present invention has been particularly shown and described with reference to exemplary embodiments thereof, it is to be understood that the invention is not limited to the disclosed exemplary embodiments. Rather, it is to be understood that numerous modifications and variations of the present invention are possible, without departing from the spirit and scope of the appended claims. Accordingly, all such modifications and changes as fall within the true spirit and scope of the present invention are to be considered as well.

**6. List of reference signs**
- 10: aircraft tire
- 11: first end
- 12: second end
- 13: first buffing trajectory
- 13a: arc segment
- 13b: arc segment
- 13c: arc segment
- 14: second buffing trajectory
- 14a: arc segment
- 14b: arc segment
- 14c: arc segment
- 15: third buffing trajectory
- 15a: arc segment
- 15b: arc segment
- 150: arc segment
- 15d: arc segment
- 15e: arc segment
- 20: body ply
- 21: cover ply
- 22: tire tread
- 22a: groove of tire tread
- 25: recess
- 40: control unit
- 50: laser scanners
- 60: industrial robot
- 70: tire rubber cutting tool
- 80: optical measurement, such one or more industrial process cameras
- 90: motor
- 100: method
- 110: spinning the tire
- 120: obtaining optical profile measurement
- 130: determining first buffing trajectory
- 140: first buffing step
- 150: cutting probing recesses
- 160: determining second buffing trajectory
- 170: second buffing step
- AX: axial direction
- α: angle (e.g., between two laser scanners)
- RA: radius
- 1000: system

## Claims

1. A computer-implemented method (100) for buffing an aircraft tire (10), the aircraft tire comprising a body ply (20), one or two cover plies (21), and a tire tread (22), the method comprising:
spinning (110) the tire around a rotation axis;
obtaining (120) an optical profile measurement of the tire tread;
determining (130), based on the profile measurement, a first buffing trajectory (13) arranged below the tire tread (22) and above the cover ply (21);
performing (140), based on the first buffing trajectory, a first buffing step for partially removing the tire tread above the cover ply;
cutting (150) one or more probing recesses (25) into the tire, for at least partially exposing the cover ply (21);
determining (160), based on an optical measurement of the one or more probing recesses, a second buffing trajectory arranged below the cover ply (21) and above the body ply (20) of the tire;
performing (170), based on the second buffing trajectory, a second buffing step for removing the cover ply (21).

2. The method (100) of claim 1, wherein obtaining the optical profile measurement of the tire tread comprises obtaining a laser profile measurement, preferably using two or more, more preferably four or more laser scanners (50), wherein at least a first laser scanner (50) is arranged angled with respect to at least a second laser scanner,
wherein preferably all laser scanners are arranged angled with respect to other laser scanners.

3. The method (100) of claim 1 or claim 2, wherein performing the first buffing step comprises controlling an industrial robot (60), preferably a 6-axis robot, operating a tire rubber cutting tool (70) based on the first buffing trajectory.

4. The method (100) of any of the preceding claims 1 to 3, wherein cutting the one or more probing recesses into the tire comprises
cutting two or more circumferential probing recesses into the tire, preferably by controlling an industrial robot, preferably a 6-axis robot, operating a tire rubber cutting tool; and / or
controlling an industrial robot, preferably a 6-axis robot, operating a tire rubber cutting tool while performing the optical measurement of the probing recesses until the cover ply is exposed for each of the probing recesses.

5. The method (100) of claim 4, wherein the two or more circumferential recesses are cut into the tire in a predefined patter preferably arranged substantially equidistantly from one another; wherein, preferably, a first circumferential recess is arranged in proximity of a first end (11) of the tire, a second circumferential recess is arranged in proximity of a second end (12) of the tire opposite to the first end seen in the axial direction (AX) of the tire, wherein a third circumferential recess is arranged between, preferably in the middle of the first and the second recess, seen in the axial direction of the tire;
wherein, preferably, cutting one or more probing recesses is performed for exposing the cover ply at substantially each angular location along the circumference of the tire.

6. The method according to one of claims 1 to 5, wherein determining the second buffing trajectory comprises:
determining, for each of the probing recesses, a position of the exposed cover ply, and
calculating, based on the determined positions of the exposed cover ply, the second buffing trajectory (14), preferably comprising three arc segments (14a, 14b, 14c).

7. The method (100) of any one of claims 1 to 6, wherein obtaining the optical profile measurement of the tire tread comprises obtaining a position and/or a depth of one or more grooves (22a) of the tire tread, in particular of the bottoms of the grooves (22a) of the tire tread; and wherein determining the first buffing trajectory (13) comprises calculating the first buffing trajectory based on the obtained position and / or depth of the one or more grooves of the tire treat.

8. The method (100) of any of claims 1 to 7, wherein determining the first and / or the second buffing trajectory comprises determining the first and / or the second buffing trajectory based on tire construction information for the tire being buffed.

9. The method (100) of one of claims 1 to 8, further comprising:
determining a third buffing trajectory (15) based on the second buffing trajectory and tire construction information for the tire being buffed;
performing, based on the third buffing trajectory, a third buffing step for removing tire rubber material above the body ply of the tire, preferably the outermost body ply of the tire in case the tire comprises more than one body ply.

10. The computer-implemented method according to any of claims 1 to 9, wherein determining the first, the second and / or the third buffing trajectory comprises calculating one or more, preferably at least five, arc segments (13a, 13b, 13c, 14a, 14b, 14c, 15a, 15b, 15c, 15d, 15e) of the respective buffing trajectory, preferably spanning across the tire.

11. The computer-implemented method according to any of claims 1 to 10, wherein obtaining the optical profile measurement of the tire tread comprises tracking a continuous tire deformation during spinning the tire around a rotation axis.

12. The computer-implemented method according to any of claims 1 to 11, wherein performing the first and/or the second buffing step comprises substantially continuously measuring a radius (RA) of the tire,
wherein preferably the third buffing step comprises substantially continuously measuring a radius (RA) of the tire.

13. A method for retreading an aircraft tire, comprising
buffing the aircraft tire according to any of the preceding claims 1 to 12; and
adding new tire rubber material, and, optionally, a new cover ply and / or a new tire tread to the buffed aircraft tire.

14. A system (1000) for buffing an aircraft tire, comprising means for carrying out the method (100) of any of claims 1 to 12,
the system preferably configured for retreading an aircraft tire, comprising means for carrying out the method of claim 13.

15. A computer program comprising instructions, which when executed by a control unit, cause a tire buffing and retreading system to carry out the method according to any one of the claims 1 to 13.
